Europäisches Patentamt

European Patent Office

Office européen des brevets

(19)

(11) Publication number: **0 055 016**
**B1**

(12) **EUROPEAN PATENT SPECIFICATION**

(45) Date of publication of patent specification: **31.07.85**

(21) Application number: **81305175.2**

(22) Date of filing: **30.10.81**

(51) Int. Cl.⁴: **H 01 M 8/12,** H 01 M 8/24,
H 01 M 2/20

(54) **High temperature solid electrolyte fuel cell configurations.**

(30) Priority: **22.12.80 US 219204**

(43) Date of publication of application:
**30.06.82 Bulletin 82/26**

(45) Publication of the grant of the patent:
**31.07.85 Bulletin 85/31**

(84) Designated Contracting States:
**CH DE FR GB IT LI NL SE**

(56) References cited:
**US-A-4 204 033**
**US-E- 28 792**

(73) Proprietor: **WESTINGHOUSE ELECTRIC CORPORATION**
**Westinghouse Building Gateway Center**
**Pittsburgh Pennsylvania 15222 (US)**

(72) Inventor: **Isenberg, Otto Arnold**
**327 Woodside Road**
**Pittsburgh Pennsylvania (US)**

(74) Representative: **van Berlyn, Ronald Gilbert**
**23, Centre Heights**
**London, NW3 6JG (GB)**

Courier Press, Leamington Spa, England.

## Description

This invention relates to fuel cell configurations and more particularly to electrical and structural arrangements of a plurality of such solid electrolyte fuel cells.

High temperature solid electrolyte fuel cells utilizing a natural or synthetic fuel gas such as those containing hydrogen, carbon monoxide, methane, and an oxidant such as oxygen or air, are known. Such cells or stacks of cells operate above 700°C to directly convert chemical energy of the fuel into direct current electrical energy by electrochemical combustion. A typical cell, for example, reacts hydrogen fuel with oxygen from air to produce electrical energy, water vapor and heat.

Each single cell, however, provides a rather small open circuit voltage, on the order of one volt. Accordingly, plural cells are typically connected in series in order to generate a higher voltage output. Various configurations for these connections are known, such as flat plate or generally tubular arrangements. However, such interconnections have given rise to concerns which are difficult to solve. For example, such cells utilize oxide air electrodes which present high lateral ohmic losses, so that the individual cell size must be small with respect to the direction of current flow. Additionally, multiple ceramic and metallic materials are often integrated, presenting differential thermal expansion and materials compatibility concerns. To minimize such concerns, particularly the ohmic losses, the art has utilized small individual band-shaped cells, on the order of one to two centimeters in length, interconnected by good electrical conductors such as noble metals as well as non-noble metals in combination with oxide conductors. Such designs, however, do not alleviate materials compatibility concerns and require a substantial number of fabrication steps to provide an integrated electrical generator of any substantial size. Additionally, the large number of small components, layers, interconnections, and fabrication steps required in such designs raises substantial concerns regarding long-term reliability.

An example of such tubular "band" designs is provided in U.S. Patent No. 3,525,646, which discloses a large plurality of small individual cells arranged along the circumference of a porous support tube. Each individual cell is small, and is electrically interconnected in series to the axially next cell along the tube by a conductor. A large plurality of cells, layers and conductive current collectors are required to achieve a substantial voltage. Preferably, the various layers are deposited on the support tube by plasma or flame spray methods. In addition to the concerns discussed above, such band type systems are susceptible to failure in any one cell or interconnect which defeats electrical interconnection for the entire series connected grouping of cells.

Another fuel cell arrangement is described in German Offenlegungsschrift No. 2,614,728, which, in an effort to obtain high power densities with the fewest possible components, forms scalloped plate type supporting bodies into a plurality of parallel channels. The channels, in conjunction with semicircular electrodes deposited therein, form fuel cells extending the length of the support bodies. The cells are interconnected through abutting radial lips and additional components. This arrangement suffers limitations similar to the deficiencies of the band designs, requiring multiple internal unaccessible connectors, and additionally depends upon the supporting plates for structural integrity. This limits the ability to electrically interconnect the cells in desirable manners, since direct contact with the cell is difficult. Additionally, the air oxidant must diffuse through the relatively thick support plates prior to gaining access to the air electrode.

It is desirable to provide a high temperature solid electrolyte fuel cell arrangement which alleviates the concerns of present designs and increases reliability.

This invention provides high temperature solid electrolyte fuel cell configurations and cell arrangements which substantially enhance reliability and alleviate many of the prior art deficiencies such as high ohmic losses, thermal expansion and other materials compatibility concerns.

More specifically, the invention resides in a high-temperature, solid electrolyte electrochemical cell arrangement comprising a plurality of elongated annular cells, each cell having inner and outer annular electrodes with an electrolyte therebetween, said outer electrode and electrolyte being made discontinuous to contain an electrically conductive interconnect adjacent a radial segment of said inner electrode, said interconnect extending an axial electrochemically active length along each said cell, a first and a second cell positioned adjacent one another and electrically connected in series between the inner electrode of said first cell and the outer electrode of said second cell through said electrically conductive interconnect.

In preferred form, a fuel cell arrangement or cell stack is formed of a plurality of individual long annular cells of various cross-sectional shapes, each on the order of 30 cm. or more in length, and each joined electrically in series to the next through an at least one interconnection extending the full axial length of the cell. Each cell is formed of a long inner porous support tube for structural integrity. Surrounding the tube periphery is a thin film porous electrode, preferably an air electrode or cathode. About the cathode is the solid electrolyte, which is in turn surrounded by the second porous electrode, preferably a fuel electrode or anode.

While the preferred inner cathode is a complete annular structure, the solid electrolyte and outer anode structures are discontinuous to provide space for an electrical interconnection for series contact between the cathode of one cell and the anode of the next cell. The interconnection on one side is contiguous with, or adjacent and otherwise electrically coupled to, a small radial segment of the inner cathode, generally along its entire axially active length. Bonded to the opposite side of the interconnection preferably is a contact segment of a porous electrode type material.

In this manner, each elongated tubular cell has a generally full length contact segment surface which can be readily placed electrically in series with an outer surface of a parallel cell. Preferably, the series connection is made through an elongated metal felt, metal strip or metallized inlay, disposed between two adjacent annular cells.

This arrangement provides a high reliability system since electrical connection is not merely through a large number of small current collecting conductors, but is made through an elengated surface spanning the active length of the tubular cell. Thus, localized failure will not defeat current transfer since the large portion of the contact surface which has not failed is still operational. Additionally, ohmic losses are small since the current is directed from one cell to the next through a short path which is normal to the annular surfaces. And, the disclosured arrangement needs only two main current collectors for any number of cells in series, one elongated axial collector at each end of the series of cells.

Another advantage of the elongated single cell concept is the ability for arranging cells electrically in series-parallel with, for example by cubic dense packing of tubes. The parallel connection is made through adjacent outer peripheries. This method of cell interconnection allows a multitude of interconnected cells in order to achieve any desired current and voltage combination.

The advantages, nature, and additional features of the invention will become more apparent from the following description of exemplary embodiments thereof when taken in connection with the accompanying drawings, in which:

Figure 1 is a schematic isometric view of a fuel cell system in accordance with a preferred embodiment of the invention;

Fig. 2 is an isometric section view of a singular tubular fuel cell;

Fig. 3 is a section view through two adjacent cells, particularly showing the interconnection between the cells;

Fig. 4 is an isometric schematic of another system configuration; and

Fig. 5 is a schematic section view of a series-parallel interconnection configuration.

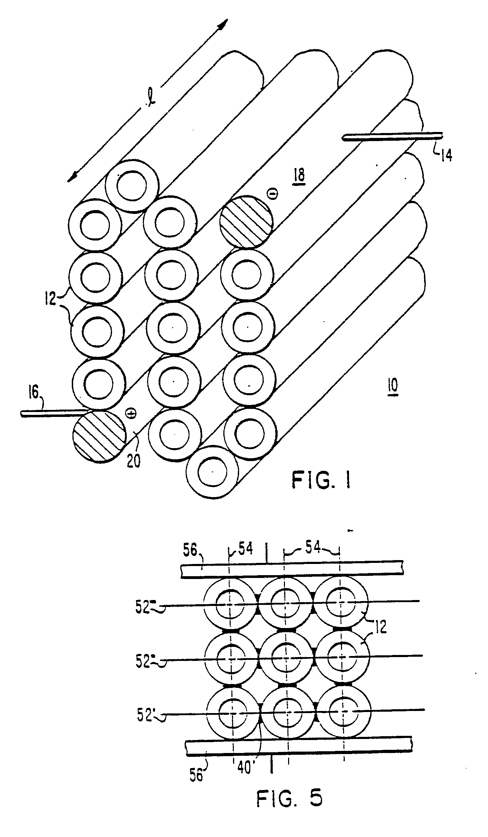

Referring now to Fig. 1, there is shown a fuel cell arrangement 10, also herein referred to as a stack, comprised of a plurality of elongated annular fuel cells 12. Each fuel cell 12 is preferably tubular, and is electrically connected, in series, to an adjacent cell 12. Annular geometric configurations other than tubular are equally possible. This electrical connection is made along a selected axial length of the cells, preferably the entire electrochemically active length. Each cell 12 generates an open circuit voltage of approximately one volt, and hundreds of cells 12 can be connected in series in order to provide a desired system voltage. The stack energy can be usefully withdrawn through leads 14 and 16, respectively electrically connected to current collecting bus bars 18 and 20. The two bus bars 18, 20 preferably extend, and are in contact with, the entire active length of the cells 12 at the ends of the stack.

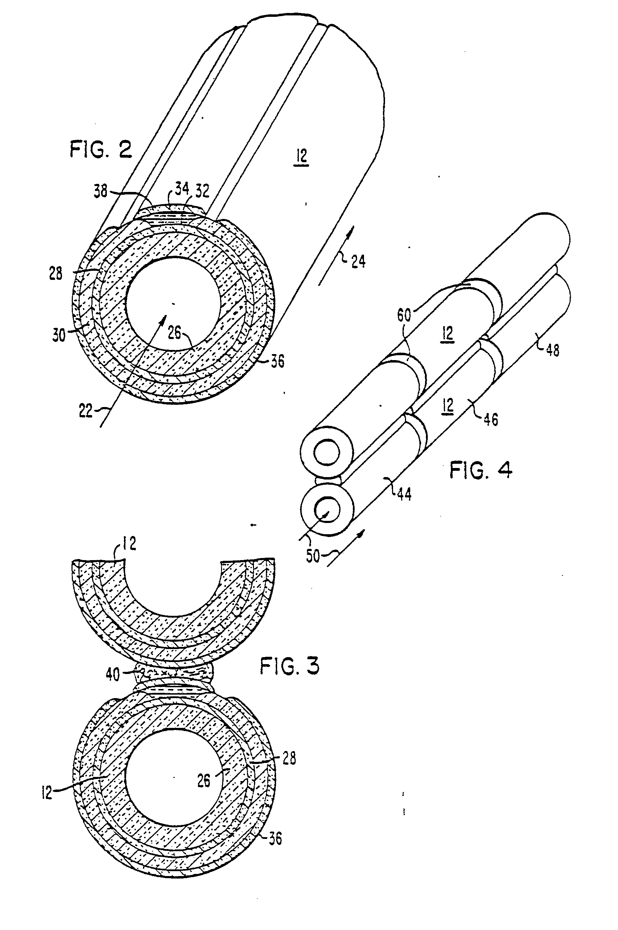

Fig. 2 shows the preferred configuration for each annular fuel cell 12. The preferred configuration is based upon a system wherein a gaseous fuel, such as hydrogen or carbon monoxide, is directed axially over the outside of the cell 12, as indicated by the arrow 24, and an oxidant, such as air, indicated by the arrow 22, flows through the inside of the cell. It will be recognized that the location of the reactant fuel and oxidant can be interchanged such that air flows about the cells and fuel flows within the cells. This, however, requires the reversal of the cell electrodes, which is herein referred to as an inverted cell structure.

In preferred form, each cell 12 includes a porous support tube 26 which provides structural integrity to the cell. In an exemplary cell 12, the support tube is comprised of calcia stabilized zirconia forming a porous wall approximately one millimeter thick. Surrounding the outer periphery of the support tube 26 is a thin film porous air electrode, or cathode 28. The exemplary system cathode 28 is a composite oxide structure approximately 50—500 μm thick, which is deposited onto the support tube through well-known techniques. The cathode is, for example, comprised of doped and undoped oxides or mixtures of oxides in the perovskite family such as $LaMnO_3$, $CaMnO_3$, $LaNiO_3$, $LaCoO_3$, $LaCrO_3$, doped indium oxide, $In_2O_3$, and other electronically conducting mixed oxides generally composed of rare earth oxides mixed with oxides of cobalt, nickel, copper, iron, chromium and manganese, and combinations of such oxides.

Generally surrounding the outer periphery of the cathode 28 is a layer of gas-tight solid electrolyte 30, comprised of yttria stabilized zirconia approximately 20 to 50 μm thick, for the exemplary cell. The electrolyte 30 can also be deposited onto the cathode by well known techniques. However, a selected radial segment 32 of the cathode 28 is, for example, masked during fabrication, and an interconnect material 34 is deposited on the segment 32.

The interconnect material 34, which preferably extends the active length of each elongated cell 12, must be electrically conductive in both an oxidant and fuel environment. Accordingly, the exemplary cell includes a gas-tight interconnection 34 approximately the same thickness as the electrolyte, 20 to 50 μm. The preferred interconnection material is an oxide doped (Ca, Sr, $M_g$) lanthanum chromite film.

Substantially surrounding the solid electrolyte 30 is a second porous electrode, for example, a nickel-zirconia cermet anode 36. As shown, the anode 36 is also discontinuous, being spaced from the interconnection 34 a distance sufficient to avoid direct electrical communication between the anode 36 and both the interconnection 34 and the cathode 28. The exemplary anode 36 is about 50 μm thick.

Preferably, deposited over the interconnection 34 is a segment 38 which is preferably comprised of the same material as the anode 36, nickel or cobalt zirconia cermet, and of the same thickness, 50 μm.

Fig. 3 shows the series interconnection between consecutive fuel cells 12. The electrical interconnection is preferably enhanced by a metal felt 40, made, for example, of nickel fibers. The felt extends axially between the annular cells 12, and is bonded to each by pressure contact which causes sinter bonding during operation. In the inverted cell structure, where fuel flows inside of the cells, the felt material is made from conducting oxide fibers, such as doped $In_2O_3$ or others.

During operation, air flows through the center of the annular cells 12, and fuel passes over the exterior. Oxygen from air diffuses through the porous support 26 and cathode 28, and fuel diffuses through the anode 36. These process mediums electrochemically react through the electrolyte, generating products such as water vapor, carbon dioxide, heat and electrical energy. The high temperature water vapor and carbon dioxide are carried away from the cell with, for example, unburned fuel, and electrical power is transferred in series from the inner cathode 28 of one cell to the outer anode 36 of the next cell. The electrical power is usefully drawn through the leads 14, 16.

A variant of the cell structure is the circumferential segmentation of the elongated single cells as shown in Figure 4. This segmentation alleviates circulating currents within the electrodes which tend to result from simultaneous exposure to rich and depleted reactants over the electrode surface. Segmentation exposes each electrode area to reactants of generally similar concentration. Without segmentation, one end of the cell is exposed to generally fresh reactants, and the other to depleted reactants. Referring to Fig. 4, segment 44 is exposed to a richer reactant concentration than segments 46 and 48, when flow of both reactants is in the direction of arrows 50. The segmentation can be provided, for example, by masking selected portions 60 of the porous support tube 26 during fabrication, and depositing only a layer of electronically insulating solid electrolyte on the selected portions, in order to insulate the segments 44, 46, 48 and seal the otherwise porous portions.

An advantageous fuel cell system configuration which is provided by the elongated surface contact among adjacent annular cells is shown in Figure 5. The cells 12 are here positioned in a series-parallel electrical connection. For descriptive purposes, the arrangement includes rows 52 and columns 54. The cells of any given row 52', 52'', 52''' are electrically interconnected in parallel through the outer electrodes and metal felt 40'. Alternatively, the felt can be eliminated and the cells positioned to abut one another along their axial length. Use of the felt is, however, preferred, in order to insure a large contact surface and avoid potential structural damage to the outer electrodes. Consecutive cells 12 along a column 54 are electrically interconnected in series, as shown in Figure 3, from the inner electrode of one cell to the outer electrode of the next cell. Thus, each cell in a row operates at substantially the same voltage, and voltage progressively changes among the cells of a column, typically varying by appoximately one volt from cell-to-cell along a column. In this manner, any number of elongated cells can be interconnected to achieve a desired voltage and current output. Other configurations, in addition to the shown rectangular array, are equally possible.

The electrical power generated by the series-parallel interconnection is readily collected by only two plates 56, one in electrical contact with each cell of a row 52 at one extremity of the stack, and another in electrical contact with each cell of the row at the other extremity.

**Claims**

1. A high-temperature, solid electrolyte electrochemical cell arrangement (10) comprising a plurality of elongated annular cells (12), each cell (12) having inner and outer annular electrodes (28, 36) with an electrolyte (30) therebetween, characterized in that said outer electrode (36) and electrolyte (30) are made discontinuous to contain an electrically conductive interconnect (34) adjacent a radial segment (32) of said inner electrode (28), said interconnect (34) extending an axial electrochemically active length along each said cell (12), a first and a second cell (12) positioned adjacent one another and electrically connected in series between the inner electrode (28) of said first cell and the outer electrode (36) of said second cell through said electrically conductive interconnect (34).

2. The electrochemical cell arrangement of claim 1 further comprising a current collector (18) in electrical contact with the first of said cells (12) in series, along said axial length, and another current collector (20) in electrical contact with the last of said cells (12) in series along said selected axial length.

3. The electrochemical cell arrangement of claim 1 wherein an electrically conductive insert (40) is provided between said first and second cells (12) and comprises a metal felt.

4. The electrochemical cell arrangement of claim 1 wherein each said cell (12) includes a plurality of circumferential segments (44, 46, 48), said segments of a cell (12) being electrically circumferentially segmented from one another.

5. The electrochemical cell arrangement of claim 1, 2, 3 or 4 wherein said first and a third cell (12) are electrically connected to one another in parallel, from the outer electrode (36) of said first cell (12).

6. The electrochemical cell arrangement of claim 5 further comprising a current collecting plate (56) in electrical contact with said first and third cells (12).

7. The electrochemical cell arrangement of claim 5 or 6 wherein said adjacent cells (12) are fuel cells and are arranged in rows and columns, the fuel cells (12) in each row (52) being electrically connected to one another in parallel, whereby each cell (12) in row (52) operates at a similar voltage, and the fuel cells (12) in each column (54) being electrically connected in series to the fuel cells (12) in the next row along a column, whereby voltage changes from row to row along a column.

8. The electrochemical cell arrangement of claim 7 wherein said rows (52) include a first row (52') and a last row (52'''), and further comprising a first current collecting plate (56) in electrical contact with each said fuel cell (12) of said first row and a second current collecting plate (56) in electrical contact with each said fuel cell (12) of said last row (52''').

**Patentansprüche**

1. Eine bei hoher Temperatur arbeitende, feste Elektrolyt-Electrochemische Zellenanordnung (10), bestehend aus einer Vielzahl von länglichen, ringförmigen Zellen (12), bei der jede Zelle (12) innere und äussere ringförmige Elektroden (28, 36) mit einem dazwischen angeordneten Elektrolyten (30) aufweist, dadurch gekennzeichnet, dass die äussere Elektrode (36) und der Elektrolyt (30) unterbrochen sind, um angrenzend an ein radiales Segment (32) der inneren Elektrode (28) Raum für eine elektrisch leitende Verbindung (34) zu schaffen, die sich entlang einer jeden Zelle (12) über eine elektrochemisch aktive Länge erstreckt, eine erste und zweite Zelle (12) nebeneinander angeordnet und zwischen der inneren Elektrode (28) der ersten Zelle und der äusseren Elektrode (36) der zweiten Zelle durch die elektrisch leitende Verbindung (34) in Reihe elektrisch verbunden sind.

2. Elektrochemische Zellenanordnung nach Anspruch 1, dadurch gekennzeichnet, dass ein Stromsammler (18) mit der ersten der Zellen (12) entlang ihrer axialen Länge in Reihenschaltung in elektrischem Kontakt steht, und ein weiterer elektrischer Kontakt in Reihenschaltung durch einen über die axiale Länge der letzten der Zellen (12) sich erstreckenden Stromsammler (20) geschaffen ist.

3. Elektrochemische Zellenanordnung nach Anspruch 1, dadurch gekennzeichnet, dass ein elektrisch leitender Einsatz (40) aus einem Metallfilz zwischen der ersten und der zweiten Zelle (12) angeordnet ist.

4. Elektrochemische Zellenanordnung nach Anspruch 1, dadurch gekennzeichnet, dass jede Zelle (12) eine Vielzahl von Ringsegmenten (44, 46, 48) aufweist, wobei die Segmente einer Zelle (12) voneinander umlaufend elektrisch isoliert sind.

5. Elektrochemische Zellenanordnung nach Anspruch 1, 2, 3 oder 4, dadurch gekennzeichnet, dass die erste und eine dritte Zelle (12) parallel von der äusseren Elektrode (36) der ersten Zelle (12) miteinander elektrisch verbunden sind.

6. Elektrochemische Zellenanordnung nach Anspruch 5, dadurch gekennzeichnet, dass die ersten und dritten Zellen (12) mit einer Stromsammlerplatte (56) elektrischen Kontakt haben.

7. Elektrochemische Zellenan-ordnung nach Anspruch 5 oder 6, dadurch gekennzeichnet, dass die benachbarten Zellen (12) Brennstoffzellen und in Reihen und Kolonnen angeordnet sind, die Brennstoffzellen (12) in jeder Reihe (52) miteinander parallel geschaltet sind, wobei jede Zelle (12) in einer Reihe (52) bei ähnlicher Spannung arbeitet, und die Brennstoffzellen (12) in jeder Kolonne (54) mit den Brennstoffzellen (12) der nächsten Reihe entlang einer Kolonne in Reihe geschaltet sind, wobei sich die Spannung von Reihe zu Reihe in einer Kolonne ändert.

8. Elektrochemische Zellenan-ordnung nach Anspruch 7, dadurch gekennzeichnet, dass die Reihen (52) eine erste Reihe (52') und eine letzte Reihe (52''') aufweisen und ferner eine erste Stromsammlerplatte (56) mit jeder der Brennstoffzellen (12) der ersten Reihe und eine zweite Stromsammlerplatte (56) mit den Brennstoffzellen (12) der letzten Reihe (52''') in elektrischem Kontakt stehen.

**Revendications**

1. Montage (10) de piles électrochimiques à électrolyte solide comprenant une pluralité de piles annulaires (12) de forme allongée, chaque pile (12) comportant des électrodes annulaires intérieure et extérieure (28, 36) avec un électrolyte (30) entre ces dernières, caractérisé en ce que ladite électrode extérieure (36) et l'électrolyte (30) sont discontinus de manière à contenir une interconnexion électroconductrice (34) adjacente à un segment radial (32) de ladite électrode intérieure (28), ladite interconnexion (34) s'étendant sur une longueur axiale électrochimiquement active le long de chaque pile (12), une première et une seconde piles (12) disposées de façon adjacente l'une à l'autre et reliées électriquement en série entre l'électrode intérieure (28) de ladite première pile et l'électrode extérieure (36) de ladite seconde pile par ladite interconnexion électroconductrice (34).

2. Montage de piles électrochimiques selon la revendication 1, comprenant en outre un collecteur de courant (18) en contact électrique avec la première desdites piles (12) en série, le long de ladite longueur axiale, et un autre collecteur (20) de courant en contact électrique avec la dernière desdites piles (12) en série le long de ladite longueur axiale choisie.

3. Montage de piles électrochimiques selon la revendication 1, dans lequel une pièce intermédiaire électroconductrice (40) est disposée entre lesdites première et seconde piles (12) et comprend un feutre métallique.

4. Montage de piles électrochimiques selon la revendication 1, dans lequel chaque pile (12) comprend une pluralité de segments circonférenciels (44, 46, 48), lesdits segments d'une pile (12) étant séparés électriquement dans le sens circonférenciel les uns des autres.

5. Montage de piles électrochimiques selon la revendication 1, 2, 3 ou 4, dans lequel lesdites première et troisième piles (12) sont reliées électriquement l'une à l'autre en parallèle à partir de l'électrode extérieure (36) de ladite première pile (12).

6. Montage de piles électrochimiques selon la revendication 5, comprenant en outre une plaque (56) collectrice de courant en contact électrique avec lesdites première et troisième piles (12).

7. Montage de piles électrochimiques selon la revendication 5 ou 6, dans lequel lesdites piles adjacentes (12) sont des piles à combustible et sont disposées en rangées et en colonnes, les piles (12) à combustible de chaque rangée (52) étant reliées électriquement les unes aux autres en parallèle, chaque pile (12) d'une rangée (52) fonctionnant à une tension similaire et les piles (12) à combustible de chaque colonne (54) étant reliées électriquement en série aux piles (12) à combustible de la rangée voisine le long d'une colonne, la tension variant d'une rangée à l'autre le long d'une colonne.

8. Montage de piles électrochimiques selon la revendication 7, dans lequel lesdites rangées (52) comprennent une première rangée (52') et une dernière rangée (52'''), et comprenant en outre une première plaque (56) collectrice de courant en contact électrique avec chaque pile (12) à combustible de ladite première rangée et une seconde plaque (56) collectrice de courant en contact électrique avec chaque pile (12) à combustible de ladite dernière rangée (52''').

FIG. 1

FIG. 5

FIG. 2

FIG. 3

FIG. 4